# EUROPÄISCHE PATENTANMELDUNG

(11) **EP 3 708 775 A1**
(43) Veröffentlichungstag der Anmeldung: **16.09.2020**
(21) Anmeldenummer: 19162843.7
(22) Anmeldetag: 14.03.2019
(51) Int. Cl.: F01D 5/14, F01D 5/28, B23K 26/342

(54) **BAUELEMENT, VERWENDUNG EINES SOLCHEN BAUELEMENTS SOWIE VERFAHREN ZUM HERSTELLEN EINES SOLCHEN BAUELEMENTS**

(71) Anmelder: Siemens Aktiengesellschaft, 80333 München (DE)
(72) Erfinder: Hanebuth, Henning, 85652 Pliening OT Gelting (DE); Kamps, Tobias, 80538 München (DE); Lupp, Friedrich, 82131 Gauting (DE)

(57) **Zusammenfassung**

Die Erfindung betrifft ein Bauelement(10), welches wenigstens eine erste Schicht (12), welche aus einer ersten Legierung gebildet ist, wenigstens eine zweite Schicht (16), welche aus einer von der ersten Legierung unterschiedlichen und Molybdän als ein Legierungselement aufweisenden zweiten Legierung gebildet ist, und eine zwischen der ersten Schicht (12) und der zweiten Schicht (16) angeordnete, auf zumindest eine der Schichten (12, 16) aufgebrachte und durch ein generatives Fertigungsverfahren hergestellte Zwischenschicht (20) aufweist, unter deren Vermittlung die erste Schicht (12) mit der zweiten Schicht (16) verbunden ist, wobei die Zwischenschicht (20) aus einer von der ersten Legierung und der zweiten Legierung unterschiedlichen und Molybdän als ein Legierungselement aufweisenden dritten Legierung gebildet ist.

## Beschreibung

Bauelement, Verwendung eines solchen Bauelements sowie Verfahren zum Herstellen eines solchen Bauelements

Die Erfindung betrifft ein Bauelement, eine Verwendung eines solchen Bauelements sowie ein Verfahren zum Herstellen eines solchen Bauelements.

Die US 2017/0122256 A1 offenbart eine Schaufel für eine Turbine eines Flugzeugmotors, wobei die Schaufel aus einer Molybdän-basierten Legierung gebildet ist, die durch intermetallische Silizide verstärkt ist. Alternativ ist die Schaufel aus einer Einkristall-Superlegierung auf Nickel-Basis gebildet.

Aufgabe der vorliegenden Erfindung ist es, ein Bauelement, eine Verwendung eines solchen Bauelements und ein Verfahren zum Herstellen eines solchen Bauelements zu schaffen, sodass das Bauelement besonders vorteilhaft hergestellt werden kann.

Diese Aufgabe wird erfindungsgemäß durch ein Bauelement mit den Merkmalen des Patentanspruchs 1, durch eine Verwendung mit den Merkmalen des Patentanspruchs 10 sowie durch ein Verfahren mit den Merkmalen des Patentanspruchs 11 gelöst. Vorteilhafte Ausgestaltungen mit zweckmäßigen Weiterbildungen der Erfindung sind in den übrigen Ansprüchen angegeben.

Ein erster Aspekt betrifft ein Bauelement, insbesondere für eine Strömungsmaschine. Die Strömungsmaschine ist beispielsweise eine Gasturbine, insbesondere eine Heißgasturbine. Insbesondere kann die Strömungsmaschine eine insbesondere als Triebwerk für ein Fluggerät ausgebildete Turbine oder eine Gasturbine sein.

Das Bauelement weist wenigstens eine erste Schicht, wenigstens eine zweite Schicht und wenigstens eine Zwischenschicht auf. Die erste Schicht und die zweite Schicht werden zusammenfassend auch als Schichten bezeichnet und sind beispielsweise entlang einer Schicht- oder Stapelrichtung aufeinanderfolgend und somit hintereinander, übereinander oder aufeinander angeordnet. Dabei ist die Zwischenschicht zumindest teilweise, insbesondere zumindest überwiegend oder vollständig, zwischen der ersten Schicht und der zweiten Schicht angeordnet, wobei die Zwischenschicht vorzugsweise entlang der Stapelrichtung zumindest teilweise, insbesondere zumindest überwiegend oder vollständig, zwischen der ersten Schicht und der zweiten Schicht angeordnet ist. Die erste Schicht ist aus einer ersten Legierung gebildet. Die zweite Schicht ist aus einer von der ersten Legierung unterschiedlichen zweiten Legierung gebildet, welche Molybdän als ein Legierungselement aufweist. Insbesondere kann die zweite Legierung eine Molybdän-basierte Legierung, das heißt eine Molybdän-Basislegierung. Insbesondere kann vorgesehen sein, dass bezogen auf alle Legierungselemente der zweiten Legierung Molybdän den größten Anteil an der Legierung aufweise.

Beispielsweise weist die erste Legierung mehrere erste Legierungselemente auf, wobei die von der ersten Legierung unterschiedliche zweite Legierung mehrere zweite Legierungselemente aufweist. Mit anderen Worten ist die erste Legierung durch die ersten Legierungselemente gebildet, und die zweite Legierung ist durch die zweiten Legierungselemente gebildet. Unter einem Legierungselement beziehungsweise unter dem jeweiligen Legierungselement ist im Rahmen der Erfindung beispielsweise ein chemisches Element zu verstehen, das beispielsweise einem Metall hinzugefügt, das heißt legiert wird, um dessen Werkstoffeigenschaften, insbesondere die Verarbeitbarkeit in einem generativen Fertigungsverfahren und/oder in einem Schweißverfahren, insbesondere gezielt, zu beeinflussen, insbesondere zu verbessern. Somit ist Molybdän eines der zweiten Legierungselemente.

Die zwischen der ersten Schicht und der zweiten Schicht angeordnete Zwischenschicht ist durch ein generatives Fertigungsverfahren hergestellt. Außerdem ist die Zwischenschicht auf zumindest eine der Schichten aufgebracht. Dies bedeutet, dass die Zwischenschicht auf die erste Schicht und/oder auf die zweite Schicht aufgebracht ist. Insbesondere ist die Zwischenschicht durch das generative Fertigungsverfahren, welches auch als additives Herstellungsverfahren bezeichnet wird, auf die zumindest eine Schicht aufgebracht, das heißt aufgetragen.

Bei dem generativen Fertigungsverfahren kann es sich beispielsweise um Laserauftragsschweißen wie beispielsweise LMD (Laser Metal Deposition) oder LWD (Laser Wire Deposition) handeln. Ferner kann es sich bei dem generativen Fertigungsverfahren um selektives Laserschmelzen wie beispielsweise SLM oder LBM (Laser Beam Melting) handeln. Ferner kann es sich bei dem generativen Fertigungsverfahren um Wire-Arc-Additive-Manufacturing (additive Lichtbogendraht-Fertigung) oder aber um ein anderes generatives Fertigungsverfahren handeln.

Die Zwischenschicht ist aus einer von der ersten Legierung und der zweiten Legierung unterschiedlichen dritten Legierung gebildet, welche beispielsweise mehrere dritte Legierungselemente aufweist. Mit anderen Worten ist die dritte Legierung aus den dritten Legierungselementen gebildet. Dabei ist eines der dritten Legierungselemente Molybdän, sodass die dritte Legierung Molybdän als ein Legierungselement aufweist.

Insbesondere kann die dritte Legierung eine Molybdän-basierte Legierung, das heißt eine Molybdän-Basislegierung. Insbesondere kann vorgesehen sein, dass bezogen auf alle Legierungselemente der dritten Legierung Molybdän den größten Anteil an der Legierung aufweise. Vorzugsweise beträgt der Anteil von Molybdän an der zweiten und/oder dritten Legierung wenigstens 30 Gewichtsprozent (Gew.-%), insbesondere wenigstens 40 Gew.-%. Vorzugsweise ist der Anteil von Molybdän (Mo) an der zweiten und/oder dritten Legierung größer als 40 Gew.-%. Insbesondere kann die dritte Legierung Rhenium (Re) als Legierungselement aufweisen. Mit anderen Worten ist es vorzugsweise vorgesehen, dass Rhenium ein weiteres der dritten Legierungselemente ist. Insbesondere kann die dritte Legierung La203 sein oder umfassen oder aus La2O3 gebildet sein. Ferner kann die zweite Legierung eine TZM-Legierung oder eine MoSiB-Legierung sein.

Des Weiteren ist die erste Schicht unter Vermittlung der Zwischenschicht mit der zweiten Schicht verbunden, insbesondere verschweißt. Hierzu ist beispielsweise die Zwischenschicht sowohl mit der ersten Schicht als auch mit der zweiten Schicht verbunden. Dabei ist es denkbar, dass die Zwischenschicht mit der ersten Schicht und/oder mit der zweiten Schicht stoffschlüssig und/oder kraftschlüssig und/oder formschlüssig verbunden ist. Insbesondere ist die Zwischenschicht mit der ersten Schicht und/oder mit der zweiten Schicht verschweißt. Insbesondere ist es denkbar, dass die Zwischenschicht durch das generative Fertigungsverfahren, durch welches die Zwischenschicht hergestellt ist, mit der zumindest einen Schicht verbunden ist. Somit wird beispielsweise die Zwischenschicht durch ihre und während ihrer Herstellung, durch welche die Zwischenschicht beispielsweise auf die zumindest eine Schicht aufgebracht wird, mit der zumindest einen Schicht verbunden, insbesondere verschweißt.

Durch Verwendung der Zwischenschicht können die erste Schicht und die zweite Schicht auf besonders vorteilhafte Weise, insbesondere besonders fest, miteinander verbunden, insbesondere miteinander verschweißt, werden, ohne dass es zu einer übermäßigen Rissbildung kommt. Hierdurch können insbesondere solche Legierung als die erste Legierung, die zweite Legierung und die dritte Legierung verwendet werden, welche besonders gut in einem Heißgaspfad angeordnet beziehungsweise in Heißgasanwendungen verwendet werden können. Insbesondere ist es möglich, das auch als Bauteil bezeichnete Bauelement durch Verwendung der Schichten und der Legierungen zumindest im Wesentlichen riss- und porenfrei beziehungsweise mit einer nur sehr geringen Anzahl an Rissen und Poren herzustellen.

Die Zwischenschicht berührt beispielsweise die erste Schicht und/oder die zweite Schicht direkt, wodurch die Schichten besonders fest und vorteilhaft miteinander verbunden werden können. Die Zwischenschicht wird dabei als Vermittlungsschicht verwendet, um die erste Schicht und die zweite Schicht unter Vermittlung der Zwischenschicht besonders vorteilhaft und insbesondere poren- und rissfrei beziehungsweise poren- und rissarm verbinden zu können.

Der Erfindung liegen dabei insbesondere die folgenden Erkenntnisse zugrunde: Molybdän-Legierungen, das heißt solche Legierungen, die Molybdän als ein Legierungselement umfassen, sind im Turbinen- und Triebwerksbau eine strategisch relevante Materialfamilie, mit deren Hilfe Prozesstemperaturen und somit Wirkungsgrade von solchen Molybdän-Legierungen umfassenden Maschinen im Vergleich zu anderen Materialfamilien weiter gesteigert werden können. Generative Fertigungsverfahren wie beispielsweise das Laserauftragsschweißen (LMD - Laser Metal Deposition; DMD - Direct Metal Deposition; DED - Direct Energy Deposition) sind dabei relevante Fertigungsverfahren, um Bauteile für Heißgasanwendungen, das heißt solche Bauteile, welche vorteilhaft in Heißgaspfaden angeordnet werden können, herstellen und/oder reparieren zu können. Bei einem solchen Bauteil handelt es sich beispielsweise um eine Schaufel, welche insbesondere eine Laufradschaufel eines Laufrads sein kann. Das Laufrad ist beispielsweise ein Laufrad einer Turbine, insbesondere einer Gasturbine und/oder Heißgasturbine. Mit anderen Worten kann das erfindungsgemäße Bauelement ein Laufrad, insbesondere eine Turbine, sein oder das erfindungsgemäße Bauelement ist eine Schaufel, insbesondere eine Laufradschaufel, für ein Laufrad einer Strömungsmaschine, insbesondere einer Turbine wie beispielsweise einer Gasturbine.

Es wurde jedoch gefunden, dass es bei der Verarbeitung von Molybdän und Molybdän-Legierungen in einem generativen Fertigungsverfahren wie beispielsweise im Laserauftragsschweißen zur Herstellung von beispielsweise Turbinenschaufeln aufgrund der schlechten Verarbeitbarkeit von Molybdän beziehungsweise von Molybdän-Legierungen, insbesondere im Hinblick auf die Schweißeiging von Molybdän beziehungsweise von Molybdän-Legierungen in diversen generativen Fertigungsverfahren zu einer übermäßigen Riss- und Porenbildung kommen kann. Eine solche übermäßige Riss- und Porenbildung bei der Herstellung des erfindungsgemäßen Bauelements kann nun vermieden werden, insbesondere durch Verwendung der Zwischenschicht.

Dabei hat es sich als besonders vorteilhaft gezeigt, wenn die erste Schicht und/oder die zweite Schicht durch ein generatives Fertigungsverfahren hergestellt sind. Beispielsweise können die erste Schicht, die zweite Schicht und die Zwischenschicht durch das gleiche generative Fertigungsverfahren hergestellt sein. Ferner ist es denkbar, dass die erste Schicht und die Zwischenschicht aus durch voneinander unterschiedliche generative Herstellungsverfahren hergestellt sind. Ferner ist es denkbar, dass die Zwischenschicht und die zweite Schicht durch voneinander unterschiedliche generative Fertigungsverfahren hergestellt sind. Im Rahmen der Erfindung ist unter dem beziehungsweise einem generativen Fertigungsverfahren eine generative beziehungsweise additive Fertigung zu verstehen, durch welche zumindest die Zwischenschicht hergestellt ist. Da die dritte Legierung eine von der ersten Legierung und von der zweiten Legierung unterschiedliche Legierung ist, kann beispielsweise die Zwischenschicht wesentlich besser mit der ersten Schicht verbunden, insbesondere verschweißt, werden, als die zweite Schicht mit der ersten Schicht ohne Verwendung der Zwischenschicht und somit beispielsweise direkt verbunden, insbesondere verschweißt, werden könnte. Außerdem kann die Zwischenschicht wesentlich besser beziehungsweise einfacher mit der zweiten Schicht verbunden, insbesondere verschweißt, werden, als die zweite Schicht ohne Verwendung der Zwischenschicht sondern beispielsweise direkt mit der ersten Schicht verbunden, insbesondere verschweißt, werden könnte. Hierzu weist beispielsweise die dritte Legierung gegenüber der ersten Legierung und/oder gegenüber der zweiten Legierung eine bessere Schweißbarkeit auf, sodass die Zwischenschicht auf besonders vorteilhafte Weise mit der ersten Schicht und mit der zweiten Schicht verbunden, insbesondere verschweißt, werden kann. In der Folge können die erste Schicht und die zweite Schicht unter Vermittlung der Zwischenschicht besonders vorteilhaft miteinander verbunden, insbesondere verschweißt, werden, sodass das Bauelement zumindest teilweise aus Molybdän und dabei riss- und porenfrei oder riss- und porenarm hergestellt werden kann.

Als besonders vorteilhaft hat es sich gezeigt, wenn die erste Legierung eine Nickel-basierte Legierung, das heißt eine Nickel-Basis-Legierung ist. Hierdurch kann das Bauelement besonders vorteilhaft und insbesondere riss- und porenarm oder riss- und porenfrei hergestellt werden. Insbesondere kann dann das Bauelement besonders vorteilhaft für Heißgasanwendungen verwendet werden.

Eine weitere Ausführungsform zeichnet sich dadurch aus, dass die erste Legierung frei von Molybdän ist. Mit anderen Worten weist die erste Legierung kein Molybdän auf, wodurch das Bauelement auf besonders einfache Weise und mit besonders vorteilhaften Eigenschaften hergestellt werden kann.

Als besonders vorteilhaft hat es sich gezeigt, wenn die zweite Legierung Molybdän, Silizium und Bor als Legierungselemente aufweist. Hierdurch können Poren und Risse bei der Herstellung des Bauelements besonders vorteilhaft vermieden oder gering gehalten werden. Insbesondere kann die zweite Legierung Molybdän, Silizium, Bor und/oder Rhenium als Legierungselemente aufweisen, wodurch besonders vorteilhafte Eigenschaften, insbesondere eine besonders vorteilhafte Verarbeitbarkeit, realisiert werden können.

Um die erste Schicht und die zweite Schicht unter Verwendung der Zwischenschicht besonders vorteilhaft miteinander verbinden, insbesondere verschweißen, zu können, hat es sich als vorteilhaft gezeigt, wenn die dritte Legierung Molybdän und Lanthan als Legierungselemente aufweist. Insbesondere ist es denkbar, dass die dritte Legierung Molybdän und außerdem Lanthan und/Rhenium aufweist, wodurch die erste Schicht und die zweite Schicht besonders gut miteinander verbunden werden können.

Alternativ dazu ist es denkbar, dass die dritte Legierung Molybdän, Titan und Zirkonium als Legierungselemente aufweist, wodurch die erste Schicht und die zweite Schicht unter Vermittlung der Zwischenschicht besonders vorteilhaft miteinander verbunden werden können. Ferner ist es denkbar, dass die dritte Legierung Molybdän und außerdem Titan und/oder Zirkonium als Legierungselemente aufweist, wodurch die erste Schicht und die zweite Schicht unter Vermittlung der Zwischenschicht besonders vorteilhaft miteinander verbunden werden können.

Dabei hat es sich als besonders vorteilhaft gezeigt, wenn die dritte Legierung als eine TZM-Legierung ausgebildet ist. Die TZM-Legierung weist beispielsweise Molybdän,
0,5 Gewichtsprozent (Gew.-%) Titan, 0,08 Gewichtsprozent Zirkonium sowie gegebenenfalls Kohlenstoff in einem Bereich von einschließlich 0,01 Gewichtsprozent bis einschließlich 0,04 Gewichtsprozent als jeweilige Legierungselemente auf.

Weist die dritte Legierung beispielsweise Molybdän und Lanthan als Legierungselemente auf, so ist die dritte Legierung beispielsweise eine sogenannte MoLa-Legierung. Ferner ist es vorzugsweise vorgesehen, dass die dritte Legierung alternativ oder zusätzlich zumindest Rhenium (Re) als Legierungselement aufweist.

Als besonders vorteilhaft hat es sich gezeigt, wenn als das generative Fertigungsverfahren Laserauftragsschweißen verwendet wird. Mit anderen Worten ist es vorzugsweise vorgesehen, dass die Zwischenschicht durch Laserauftragsschweißen auf die zumindest eine Schicht aufgebracht beziehungsweise hegestellt ist.

Die Zwischenschicht, welche insbesondere gradiert oder mit diskreten Materialstufen vorliegen kann, wird beispielsweise direkt mittels des generativen Fertigungsverfahrens gradiert und dadurch beispielsweise auf die zumindest eine Schicht, insbesondere auf die erste Schicht, aufgebracht. Die zumindest eine Schicht, insbesondere die erste Schicht, fungiert als Substrat, auf welches die Zwischenschicht durch das beispielsweise als ein Schweißverfahren ausgebildete generative Fertigungsverfahren aufgebracht ist beziehungsweise wird. In der Folge kann eine sehr gute Anbindung und eine sehr gute Schweißbarkeit geschaffen werden. Dabei ist es denkbar, dass das beispielsweise als Schaufel ausgebildete Bauelement im Ganzen aus der dritten Legierung gebildet ist.

Somit gehört zur Erfindung vorzugsweise auch ein Bauelement, welches zumindest teilweise, insbesondere zumindest überwiegend oder vollständig, aus der zuvor beschriebenen dritten Legierung gebildet ist. Insbesondere handelt es sich bei der dritten Legierung um eine Molybdän-Lanthan-Legierung oder um eine TZM-Legierung.

Schließlich hat es sich als besonders vorteilhaft gezeigt, wenn die Zwischenschicht mit wenigstens einer der Schichten verschweißt ist. Dadurch kann ein besonders fester Zusammenhalt der Schichten untereinander gewährleistet werden.

Die Erfindung ermöglicht insbesondere die Herstellung von Bauelementen für Heißgaspfade beziehungsweise Heißgasanwendungen, wobei diese Bauelemente besonders vorteilhaft aus Molybdän-Legierungen hergestellt werden können. Hierdurch lassen sich besonders große Wirkungsgrade von Maschinen wie beispielsweise Gasturbinen realisieren, sodass gegenüber herkömmlichen Lösungen Effizienzsteigerungen darstellbar sind. Insbesondere ermöglicht die Erfindung den Einsatz hochwarmfester und sprödharter Materialien, wodurch im Vergleich zu herkömmlichen Lösungen eine besonders hohe Leistungsfähigkeit von Maschinen realisiert werden kann. Außerdem können auch kleine Losgrößen mittels der Erfindung wirtschaftlich gefertigt werden.

Vorzugsweise ist die dritte Legierung eine schweißbare und sprödharte Legierung, das heißt ein schweißbares und sprödhartes Material, welches durch das generative Fertigungsverfahren, welches vorzugsweise ein additives Materialauftragsverfahren ist, hergestellt ist. Das schweißbare und sprödharte Material ist dabei vorzugsweise durch das generative Fertigungsverfahren, insbesondere durch das additive Materialauftragsverfahren, auf die zumindest eine Schicht, insbesondere auf die erste Schicht, insbesondere direkt, aufgebracht beziehungsweise aufgetragen und somit gradiert. Außerdem ermöglicht die Erfindung eine schichtweise Abstufung des beispielsweise als Schaufel, beispielsweise als Laufradschaufel, ausgebildeten Bauelements durch eine Kombination der Legierungen. Hierbei ist die zweite Legierung beispielsweise als eine Molybdän-Silizium-Bor-Legierung ausgebildet, während die dritte Legierung beispielsweise als eine TZM-Legierung und/oder als eine Molybdän-Lanthan-Legierung ausgebildet ist. Außerdem ermöglicht die Erfindung eine hybride Fertigung von Verzahnungen durch konventionelle Herstellung von Substraten, meist aus Nickel-Basiswerkstoffen wie Tannenbaumprofilen.

Ein zweiter Aspekt der Erfindung betrifft eine Verwendung eines erfindungsgemäßen Bauelements gemäß dem ersten Aspekt der Erfindung, wobei das erfindungsgemäße Bauelement für eine Strömungsmaschine, insbesondere für eine Turbine, verwendet wird. Insbesondere ist hierbei das Bauelement als eine Schaufel, insbesondere als eine Laufradschaufel, eines Laufrads der Strömungsmaschine ausgebildet. Vorzugsweise ist das Bauelement in einem auch als Gaspfad oder Heißgaspfad bezeichneten Pfad angeordnet, welcher von einem Gas, insbesondere von einem Heißgas, durchströmbar ist. Mit anderen Worten wird der Pfad während eines Betriebs der Strömungsmaschine von einem Gas, insbesondere von einem Heißgas, durchströmt. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Ein dritter Aspekt der Erfindung betrifft ein Verfahren zum Herstellen eines Bauelements, insbesondere eines erfindungsgemäßen Bauelements gemäß dem ersten Aspekt der Erfindung. Bei dem Verfahren wird wenigstens eine aus einer ersten Legierung gebildete erste Schicht bereitgestellt. Beispielsweise wird im Rahmen des Verfahrens die erste Schicht hergestellt, insbesondere durch ein generatives Fertigungsverfahren. Ferner ist es denkbar, dass die bereits hergestellte erste Schicht bereitgestellt wird. Mit anderen Worten ist es denkbar, dass die erste Schicht im bereits hergestellten Zustand bereitgestellt wird.

Des Weiteren wird bei dem erfindungsgemäßen Verfahren wenigstens eine zweite Schicht bereitgestellt, welche aus einer von der ersten Legierung unterschiedlichen und Molybdän als ein Legierungselement aufweisenden zweiten Legierung gebildet ist. Beispielsweise wird die zweite Schicht im Rahmen des erfindungsgemäßen Verfahrens, insbesondere durch ein generatives Fertigungsverfahren, hergestellt, oder die bereits hergestellte zweite Schicht wird bereitgestellt. Mit anderen Worten ist es denkbar, dass die zweite Schicht in ihrem bereits hergestellten Zustand bereitgestellt wird.

Des Weiteren wird bei dem Verfahren eine Zwischenschicht hergestellt, welche aus einer von der ersten Legierung und der zweiten Legierung unterschiedlichen und Molybdän als ein Legierungselement aufweisenden dritten Legierung mittels eines generativen Fertigungsverfahrens hergestellt wird. Mit anderen Worten wird bei dem erfindungsgemäßen Verfahren die Zwischenschicht durch ein generatives Fertigungsverfahren hergestellt. Ferner ist es denkbar, dass die zweite Schicht durch ein generatives Fertigungsverfahren hergestellt wird. Die Zwischenschicht wird zwischen der ersten Schicht und der zweiten Schicht angeordnet. Außerdem wird die erste Schicht mit der zweiten Schicht unter Vermittlung der Zwischenschicht, das heißt über die Zwischenschicht, verbunden. Beispielsweise wird die Zwischenschicht mit der ersten Schicht und/oder mit der zweiten Schicht verschweißt, sodass die erste Schicht und die zweite Schicht über die Zwischenschicht miteinander verschweißt werden. Vorteile und vorteilhafte Ausgestaltungen des ersten Aspekts und des zweiten Aspekts der Erfindung sind als Vorteile und vorteilhafte Ausgestaltungen des dritten Aspekts der Erfindung anzusehen und umgekehrt.

Das erfindungsgemäße Verfahren ermöglicht es, das Bauelement riss- und porenarm, insbesondere riss- und porenfrei, insbesondere vollständig, herzustellen. Außerdem ermöglicht es das erfindungsgemäße Verfahren, ein insbesondere beschädigtes Bauteil zu reparieren. Hierbei ist beispielsweise die erste Schicht das beschädigte Bauteil beziehungsweise das beschädigte Bauteil bildet die erste Schicht oder weist die erste Schicht auf. Auf die erste Schicht und somit auf das beschädigte Bauteil wird beispielsweise die Zwischenschicht durch das generative Fertigungsverfahren aufgebracht, durch welches die Zwischenschicht hergestellt wird. Daran anschließend wird beispielsweise die zweite Schicht mit der Zwischenschicht verbunden, insbesondere verschweißt, wodurch die zweite Schicht über die Zwischenschicht mit der ersten Schicht und somit mit dem beschädigten Bauteil verbunden, insbesondere verschweißt, wird. Beispielsweise wird die zweite Schicht mittels eines generativen Fertigungsverfahrens und somit durch additive Fertigung hergestellt und durch das generative Fertigungsverfahren, durch welches die zweite Schicht hergestellt wird, auf die Zwischenschicht aufgebracht und dabei mit der Zwischenschicht verbunden, insbesondere verschweißt. Dadurch kann das beschädigte Bauteil mittels der Zwischenschicht und mittels der dritten Schicht zu einer funktionstüchtigen beziehungsweise reparierten Baueinheit ergänzt werden, welche dann als das Bauelement beispielsweise in einer Strömungsmaschine vorteilhaft verwendet werden kann.

Um das Bauelement beziehungsweise die Baueinheit besonders vorteilhaft und insbesondere besonders zeit- und kostengünstig herstellen zu können, ist es in vorteilhafter Ausgestaltung der Erfindung vorgesehen, dass die Zwischenschicht aus einem Pulver hergestellt wird. Ferner ist es denkbar, dass die zweite Schicht und/oder die erste Schicht aus einem jeweiligen Pulver hergestellt werden.

Eine weitere Ausführungsform zeichnet sich dadurch aus, dass die Zwischenschicht mittels wenigstens eines Energiestrahls hergestellt wird. Hierdurch können die Zwischenschicht und somit das Bauelement insgesamt zeit- und kostengünstig hergestellt werden.

Als weiterhin vorteilhaft hat es sich gezeigt, wenn die erste Schicht und/oder die zweite Schicht mittels wenigstens eines jeweiligen Energiestrahls hergestellt werden. Als der jeweilige Energiestrahl wird vorzugsweise ein Laserstrahl verwendet.

Um die jeweilige Schicht beziehungsweise die Zwischenschicht aus dem Pulver herzustellen, wird beispielsweise zumindest ein Teil des Pulvers mit dem Energiestrahl bestrahlt und somit beaufschlagt. Das Pulver ist beispielsweise eine granulare Materie, welche eine Vielzahl an insbesondere eigensteifen Partikeln aufweist. Zunächst sind die Partikel voneinander lose, das heißt noch nicht miteinander verbunden. Wird nun zunächst der Teil des Pulvers mit dem Energiestrahl bestrahlt und somit beaufschlagt, so werden zumindest die den Teil bildenden Partikel des Pulvers mittels des Energiestrahls erwärmt und dadurch miteinander verbunden. Hierbei werden beispielsweise die Partikel miteinander verbacken und dadurch miteinander verbunden. Insbesondere ist es denkbar, dass die Partikel durch das Erwärmen geschmolzen, das heißt an- und/oder aufgeschmolzen und dadurch miteinander verbunden werden.

Da das Bauelement die erste Schicht, die zweite Schicht und die Zwischenschicht aufweist, weist das Bauelement einen Schichtaufbau auf, welcher die erste Schicht, die zweite Schicht und die Zwischenschicht umfasst. Das Bauelement ist dabei zumindest teilweise, insbesondere zumindest überwiegend oder vollständig, durch den Schichtaufbau gebildet. Somit ist es beispielsweise denkbar, dass das Bauelement schichtweise beziehungsweise Schicht für Schicht hergestellt ist beziehungsweise wird.

Eine weitere Ausführungsform zeichnet sich dadurch aus, dass bei dem erfindungsgemäßen Verfahren als das generative Fertigungsverfahren, mittels welchem die Zwischenschicht hergestellt und vorzugsweise auf die zumindest eine Schicht aufgebracht wird, Laserauftragsschweißen verwendet wird. Dadurch kann das Bauelement besonders riss- und porenarm, insbesondere riss- und porenfrei, hergestellt werden.

Schließlich hat es sich als besonders vorteilhaft gezeigt, wenn die Zwischenschicht mittels des generativen Fertigungsverfahrens auf die zumindest eine Schicht aufgebracht wird, wobei die zumindest eine Schicht auf mindestens 500 Grad Celsius oder auf über 500 Grad Celsius erwärmt wird, bevor und/oder während die Zwischenschicht auf die zumindest eine Schicht aufgebracht wird.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- FIG 1: ausschnittsweise eine schematische und geschnittene Seitenansicht eines erfindungsgemäßen Bauelements gemäß einer ersten Ausführungsform;
- FIG 2: ausschnittsweise eine schematische und geschnittene Seitenansicht des Bauelements gemäß einer zweiten Ausführungsform;
- FIG 3: ausschnittsweise eine schematische und geschnittene Seitenansicht des Bauelements gemäß einer dritten Ausführungsform;
- FIG 4: eine schematische Darstellung einer ersten Ausführungsform eines Verfahrens zum Herstellen des Bauelements;
- FIG 5: eine schematische Darstellung einer zweiten Ausführungsform des Verfahrens;
- FIG 6: eine schematische Darstellung einer dritten Ausführungsform des Verfahrens;
- FIG 7: ausschnittsweise eine schematische Perspektivansicht einer Vorrichtung zum Durchführen des Verfahrens und somit zum Herstellen des Bauelements; und
- FIG 8: ausschnittsweise eine schematische Perspektivansicht der Vorrichtung.

In den FIG sind gleiche oder funktionsgleiche Elemente mit gleichen Bezugszeichen versehen.

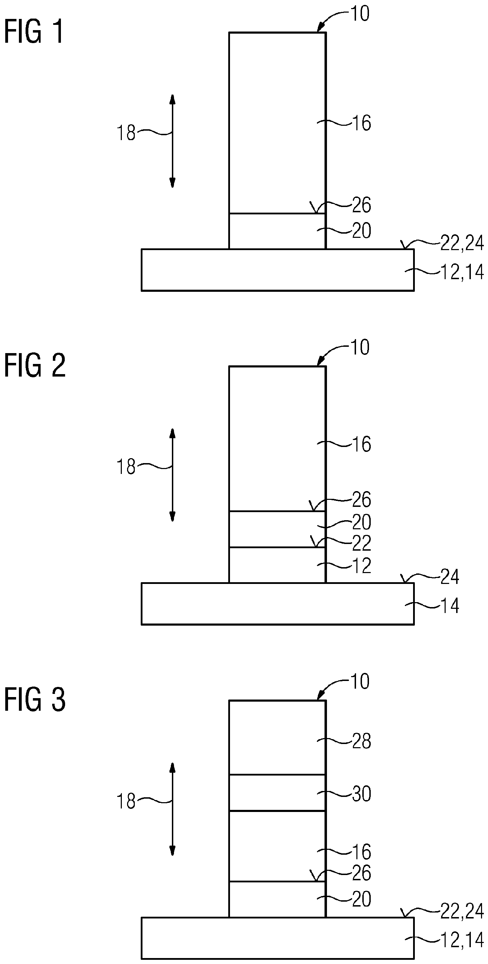

FIG 1 zeigt ausschnittsweise in einer schematischen und geschnittenen Seitenansicht ein Bauelement 10, welches beispielsweise für eine Strömungsmaschine wie eine Turbine verwendet wird. Beispielsweise ist das Bauelement 10 eine Schaufel, insbesondere eine Laufradschaufel, eines Laufrads der Turbine. Während eines Betriebs der Turbine wird das Bauelement 10 von einem Gas, insbesondere von einem auch als Heißgas bezeichneten heißen Gas, umströmt.

Um nun das Bauelement 10 besonders vorteilhaft und insbesondere besonders poren- und rissarm, insbesondere poren- und rissfrei, herstellen, insbesondere reparieren, zu können, weist das Bauelement 10 wenigstens eine erste Schicht 12 auf. Die erste Schicht 12 ist aus einer ersten Legierung gebildet, welche beispielsweise eine Nickel-basierte Legierung, das heißt eine Nickel-Basis-Legierung, ist. Die erste Schicht 12 ist oder bildet beispielsweise ein Substrat 14, welches beispielsweise im Rahmen eines Verfahrens zum Herstellen des Bauelements 10 hergestellt oder aber in bereits hergestelltem Zustand bereitgestellt wird. Beispielsweise kann die Schicht 12 durch additive Fertigung, das heißt durch ein generatives Fertigungsverfahren, hergestellt sein beziehungsweise werden.

Das Bauelement 10 weist wenigstens eine zweite Schicht 16 auf, wobei die Schichten 12 und 16 entlang einer in FIG 1 durch einen Doppelpfeil 18 veranschaulichten und auch als Schichtrichtung oder Schichtungsrichtung bezeichneten Stapelrichtung aufeinanderfolgend beziehungsweise hintereinander angeordnet sind. Vorliegend sind die Schichten 12 und 16 entlang der Stapelrichtung aufeinander beziehungsweise übereinander angeordnet. Die zweite Schicht 16 ist dabei aus einer von der ersten Legierung unterschiedlichen zweiten Legierung gebildet, wobei die zweite Legierung Molybdän als ein Legierungselement aufweist. Die erste Legierung ist aus mehreren ersten Legierungselementen gebildet, wobei die zweite Schicht 16 aus mehreren zweiten Legierungselementen gebildet ist. Dabei ist Molybdän eines der zweiten Legierungselemente. Vorzugsweise ist keines der ersten Legierungselemente Molybdän, sodass vorzugsweise die zweite Legierung frei von Molybdän ist. Vorzugsweise weist die zweite Legierung Molybdän, Silizium und Bor als Legierungselemente auf, sodass die zweite Legierung vorzugsweise eine Molybdän-Silizium-Bor-Legierung ist. Im Rahmen des zuvor genannten Verfahrens wird die Schicht 16 beispielsweise durch ein generatives Fertigungsverfahren hergestellt, oder die Schicht 16 wird im bereits hergestellten Zustand bereitgestellt.

Das Bauelement 10 weist darüber hinaus eine Zwischenschicht 20 auf, welche entlang der durch den Doppelpfeil 18 veranschaulichten Stapelrichtung zwischen den Schichten 12 und 16 angeordnet ist. Bei dem in FIG 1 gezeigten Ausführungsbeispiel ist die Zwischenschicht 20 auf die Schicht 12 aufgebracht beziehungsweise aufgetragen. Außerdem ist die Zwischenschicht 20 durch ein generatives Fertigungsverfahren, insbesondere durch ein additives Materialauftragsverfahren, hergestellt, wobei bei dem in FIG 1 gezeigten Ausführungsbeispiel die Zwischenschicht 20 durch das generative Fertigungsverfahren, durch welches die Zwischenschicht 20 hergestellt ist beziehungsweise wird, auf die Schicht 12 und somit auf das Substrat 14 aufgebracht ist beziehungsweise wird. Mit anderen Worten ist es im Rahmen des zuvor genannten Verfahrens vorgesehen, die Zwischenschicht 20 durch ein generatives Fertigungsverfahren und somit additiv herzustellen, wobei die Zwischenschicht 20 durch das generative Fertigungsverfahren, durch welches die Zwischenschicht 20 hergestellt wird, auf die Schicht 12 beziehungsweise auf das Substrat 14, insbesondere auf eine der Schicht 16 zugewandte Oberfläche 22 der Schicht 12, aufgebracht beziehungsweise aufgetragen wird. Dabei ist beziehungsweise wird die Schicht 16 unter Vermittlung der Zwischenschicht 20 mit der Schicht 12 verbunden. Hierzu wird beispielsweise die Zwischenschicht 20 durch das generative Fertigungsverfahren, durch welches die Zwischenschicht 20 hergestellt wird, mit der Schicht 12 und/oder mit der Schicht 16 verbunden.

Beispielsweise wird die Zwischenschicht 20 durch das generative Fertigungsverfahren, durch welches die Zwischenschicht 20 hergestellt wird, auf die Schicht 12 aufgebracht und mit der Schicht 12 verbunden, insbesondere verschweißt. Ferner ist es denkbar, dass die Schicht 16 durch das generative Fertigungsverfahren, durch welches die Schicht 16 hergestellt wird, auf die Zwischenschicht 20 aufgebracht und mit der Zwischenschicht 20 verbunden, insbesondere verschweißt, wird. Dadurch werden beispielsweise die Schichten 16 und 12 über die Zwischenschicht 20 miteinander verbunden, insbesondere miteinander verschweißt. Die Zwischenschicht 20 ist dabei aus einer dritten Legierung gebildet, welche mehrere dritte Legierungselemente aufweist. Eines der dritten Legierungselemente ist dabei Molybdän, sodass die Zwischenschicht 20 Molybdän als Legierungselement aufweist. Die dritte Legierung ist dabei eine von der ersten Legierung und von der zweiten Legierung unterschiedliche dritte Legierung, wodurch die Schichten 12 und 16 über die Zwischenschicht 20 besonders vorteilhaft miteinander verbunden, insbesondere miteinander verschweißt, werden können. Insbesondere kann das Bauelement 10 poren- und rissarm, insbesondere poren- und rissfrei, hergestellt werden. Vorzugsweise ist die dritte Legierung eine Molybdän-Lanthan-Legierung (MoLa-Legierung) oder eine TZM-Legierung, sodass die dritte Legierung beispielsweise Molybdän, Titan und Zirkonium als Legierungselemente aufweist.

FIG 2 zeigt eine zweite Ausführungsform des Bauelements 10. Bei der zweiten Ausführungsform sind die Schicht 12 und das Substrat 14 beispielsweise als separat voneinander ausgebildete und miteinander verbundene, insbesondere miteinander verschweißte, Teile ausgebildet. Beispielsweise ist die Schicht 12 durch ein generatives Fertigungsverfahren hergestellt und durch das generative Fertigungsverfahren, durch welches die Schicht 12 hergestellt ist, auf das Substrat 14, insbesondere auf eine der Schicht 12 zugewandte Oberfläche 24 des Substrats 14, aufgebracht. Ferner ist beziehungsweise wird die Schicht 12 durch das generative Fertigungsverfahren, durch welches die Schicht 12 hergestellt wird beziehungsweise ist, mit dem Substrat 14 verbunden. Auch bei der zweiten Ausführungsform ist die Zwischenschicht 20 entlang der Stapelrichtung zwischen den Schichten 12 und 16 angeordnet.

Die Zwischenschicht 20 wird beispielsweise aus wenigstens einem Pulver und mittels wenigstens eines Energiestrahls, insbesondere mittels wenigstens eines Laserstrahls, hergestellt. Das Pulver umfasst beispielsweise eine Vielzahl an eigensteifen Partikeln, welche zunächst voneinander lose sind. Zunächst wird das Pulver in einem Zustand, in welchem die Partikel voneinander lose und noch nicht miteinander verbunden sind, auf der Schicht 12, insbesondere auf deren Oberfläche 22, angeordnet. Daraufhin wird zumindest ein Teil des Pulvers mit dem Energiestrahl bestrahlt und somit beaufschlagt. Hierdurch werden die zumindest den Teil des Pulvers bildenden Partikel erwärmt, wodurch die zumindest den Teil bildenden Partikel miteinander verbunden werden. Insbesondere werden die Partikel mittels des Laserstrahls erwärmt und durch das Erwärmen miteinander verbacken und dadurch miteinander verbunden. Insbesondere ist es denkbar, dass die Partikel durch das Erwärmen geschmolzen, das heißt an- oder aufgeschmolzen, werden, wodurch die Partikel miteinander verbunden werden. Die beziehungsweise alle Partikel des Pulvers, aus welchem die Schicht 12 hergestellt ist beziehungsweise wird, können aus dem gleichen Werkstoff, insbesondere aus der gleichen Drittlegierung, gebildet sein, sodass die Zwischenschicht 20 aus genau einem Pulver hergestellt wird. Ferner ist es denkbar, dass die Zwischenschicht 20 aus mehreren, insbesondere miteinander vermischten, Pulvern hergestellt wird, wobei beispielsweise ein erstes der mehreren Pulver aus einem ersten Werkstoff und ein zweites der mehreren Pulver aus einem von dem ersten Werkstoff unterschiedlichen zweiten Werkstoff gebildet ist. Der erste Werkstoff kann beispielsweise die dritte Legierung sein, wobei der zweite Werkstoff eine von der ersten Legierung, von der zweiten Legierung und von der dritten Legierung unterschiedliche vierte Legierung sein kann, welche vorzugsweise Molybdän als ein Legierungselement aufweist.

Ferner ist es denkbar, dass die Schicht 16 aus einem weiteren Pulver sowie mittels wenigstens eines beispielsweise als Laserstrahl ausgebildeten weiteren Energiestrahls hergestellt wird. Hierzu wird beispielsweise das weitere Pulver auf die Zwischenschicht 20, insbesondere auf eine der Schicht 16 zugewandte Oberfläche 26 der Zwischenschicht 20, aufgebracht, insbesondere nachdem die Zwischenschicht 20 hergestellt wurde. Daraufhin wird zumindest ein Teil des auf die Oberfläche 26 aufgebrachten weiteren Pulvers mit dem weiteren Energiestrahl bestrahlt und somit beaufschlagt. Hierdurch werden Partikel des weiteren Pulvers erwärmt und miteinander verbunden, wodurch die Schicht 16 additiv hergestellt wird.

FIG 3 zeigt eine dritte Ausführungsform des Bauelements 10. Bei der dritten Ausführungsform weist das Bauelement 10 die wie bei der ersten Ausführungsform das Substrat 14 bildende Schicht 12, die Schicht 16 und die dazwischen angeordnete Zwischenschicht 20 auf. Außerdem weist das Bauelement 10 eine dritte Schicht 28 und eine zweite Zwischenschicht 30 auf, wobei die Schichten 16 und 28 entlang der durch den Doppelpfeil 18 veranschaulichten Stapelrichtung aufeinanderfolgend und dabei übereinander angeordnet sind. Dabei ist die zweite Zwischenschicht 30 entlang der Stapelrichtung zwischen den Schichten 16 und 28 angeordnet, sodass die Schichten 16 und 28 unter Vermittlung der Zwischenschicht 30 miteinander verbunden, insbesondere miteinander verschweißt, sein können. Die Schicht 28 ist beispielsweise aus der zweiten Legierung gebildet, aus welcher auch die Schicht 16 gebildet ist. Die Zwischenschicht 30 ist beispielsweise aus der dritten Legierung oder aus der vierten Legierung oder aus einer fünften Legierung gebildet, wobei die fünfte Legierung eine von der ersten Legierung, von der zweiten Legierung und von der dritten Legierung sowie vorzugsweise von der vierten Legierung unterschiedliche Legierung ist. Dabei können die vorigen und folgenden Ausführungen zur Schicht 16 auf die Schicht 28 übertragen werden. Alternativ oder zusätzlich können die vorigen und folgenden Ausführungen zur Zwischenschicht 20 auf die Zwischenschicht 30 übertragen werden.

Insgesamt ist aus FIG 1 bis 3 erkennbar, dass das Bauelement 10 mehrere Schichten und somit einen Schichtaufbau aufweist. Durch den Schichtaufbau und die Verwendung der Zwischenschicht 20 beziehungsweise 30 können die Schichten 12, 16 und 28 miteinander verbunden, insbesondere miteinander verschweißt, werden, ohne dass es zu einer übermäßigen Riss- und Porenbildung kommt. Als vorteilhaft hat es sich gezeigt, wenn das Substrat 14 beziehungsweise die Schicht 12, insbesondere mittels einer Heizeinrichtung, auf mindestens oder über 500 Grad erwärmt wird, bevor und/oder während die Zwischenschicht 20 auf die Schicht 12 beziehungsweise das Substrat 14 aufgebracht und somit hergestellt und mit der Schicht 12 beziehungsweise mit dem Substrat 14 verbunden wird. Insgesamt ermöglicht die Verwendung der Zwischenschicht 20 beziehungsweise 30 eine besonders vorteilhafte Anhaftung beziehungsweise Anbindung der jeweiligen Schicht 16 beziehungsweise 28 an die Schicht 12 beziehungsweise an das Substrat 14.

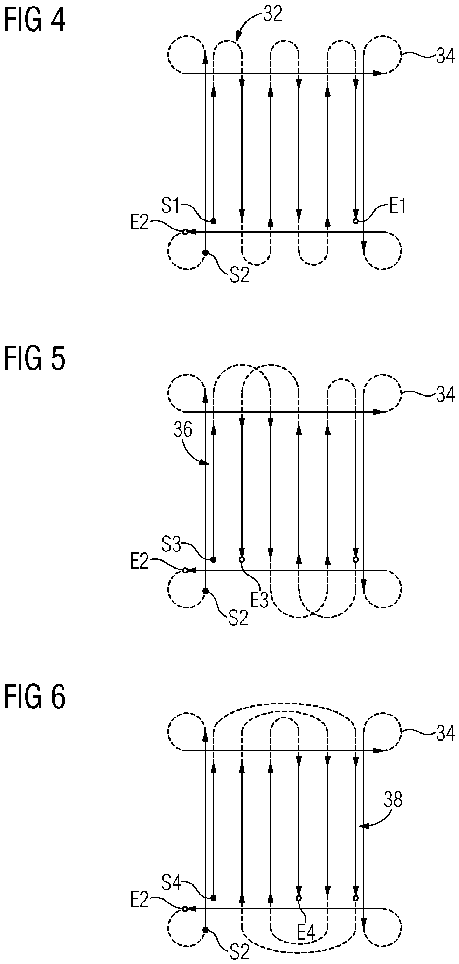

FIG 4 veranschaulicht eine erste, auch als Scanstrategie oder Aufbaustrategie bezeichnete Strategie, gemäß welcher der Energiestrahl entlang des Pulvers beziehungsweise relativ zu dem Pulver bewegt werden kann, während das Pulver mit dem Energiestrahl bestrahlt wird. Insbesondere dann, wenn als das generative Fertigungsverfahren Laserauftragsschweißen beziehungsweise LMD (Laser Metal Deposition) verwendet beziehungsweise durchgeführt wird, ist die Strategie eine Aufbaustrategie. Wird als das generative Fertigungsverfahren beispielsweise ein Pulverbett-Verfahren wie beispielsweise selektives Laserschmelzen beziehungsweise SLM durchgeführt, so ist die Strategie beispielsweise eine Scanstrategie. Dabei veranschaulichten Pfeile 32 eine erste Bewegungsbahn, welche bei einem Startpunkt S1 beginnt und bei einem Endpunkt E1 endet. Dabei wird beispielsweise der Energiestrahl entlang der ersten Bewegungsbahn 32 und dabei beginnend bei dem Startpunkt S1 und endend bei dem Endpunkt E1 relativ zu dem Pulver bewegt, während das Pulver mit dem Energiestrahl beaufschlagt wird. Dadurch kann beispielsweise die Zwischenschicht 20 und/oder die Zwischenschicht 30 und/oder die Schicht 12 und/oder die Schicht 16 und/oder die Schicht 28 hergestellt werden.

Außerdem veranschaulichen Pfeile 34 eine zweite Bewegungsbahn, welche bei einem zweiten Startpunkt S2 beginnt und bei einem zweiten Endpunkt E2 endet, oder die zweite Bewegungsbahn beginnt und endet bei dem zweiten Startpunkt S2. Der Energiestrahl wird beispielsweise entlang der zweiten Bewegungsbahn beginnend bei dem zweiten Startpunkt S2 und endend bei dem Endpunkt E2 oder bei dem Startpunkt S2 relativ zu dem Pulver bewegt, während das Pulver mit dem Energiestrahl bestrahlt wird. Durch die erste Bewegungsbahn und die zweite Bewegungsbahn beziehungsweise durch Bewegen des Energiestrahls entlang der jeweiligen Bewegungsbahn kann beispielsweise die Zwischenschicht 20 und/oder die Zwischenschicht 30 und/oder die Schicht 12 und/oder die Schicht 16 und/oder die Schicht 28 hergestellt werden.

FIG 5 veranschaulicht eine zweite Strategie, auf welche die vorigen und folgenden Ausführungen zu der ersten Strategie übertragen werden können. Pfeile 36 veranschaulichen eine dritte Bewegungsbahn, die bei einem Startpunkt S3 beginnt und bei einem Endpunkt E3 endet. Außerdem veranschaulichen die Pfeile 34 die zweite Bewegungsbahn, welche gemäß FIG 5 mit der dritten Bewegungsbahn kombiniert ist. Dabei wird beispielsweise der Energiestrahl entlang der dritten Bewegungsbahn und entlang der zweiten Bewegungsbahn relativ zu dem Pulver bewegt, während das Pulver mit dem Energiestrahl beaufschlagt wird, wodurch die jeweilige Schicht additiv hergestellt werden kann.

Des Weiteren veranschaulicht FIG 6 eine auch als dritte Scanstrategie bezeichnete dritte Strategie, gemäß welcher die jeweilige Schicht hergestellt werden kann. In FIG 6 veranschaulichen Pfeile 38 eine vierte Bewegungsbahn, welche bei einem vierten Startpunkt S4 beginnt und bei einem vierten Endpunkt E4 endet. Gemäß FIG 6 ist die vierte Bewegungsbahn mit der durch die Pfeile 34 veranschaulichten zweiten Bewegungsbahn kombiniert, um beispielsweise die jeweilige Schicht dadurch herzustellen, dass der Energiestrahl entlang der zweiten Bewegungsbahn und entlang der vierten Bewegungsbahn relativ zu dem Pulver bewegt wird, während das Pulver mit dem Energiestrahl beaufschlagt und somit bestrahlt wird.

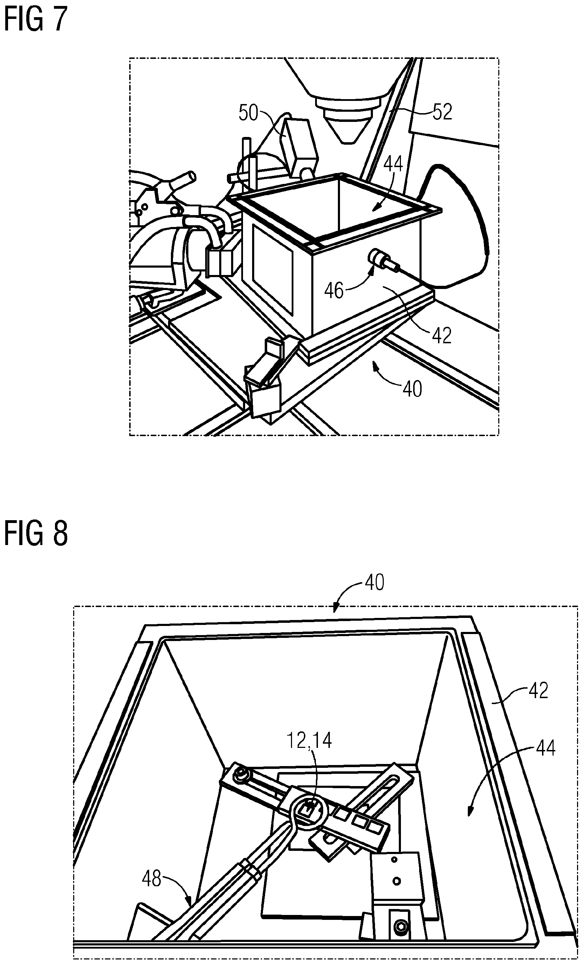

FIG 7 und 8 veranschaulichen in einer jeweiligen schematischen Perspektivansicht eine Vorrichtung 40, mittels welcher das jeweilige Bauelement 10 herstellbar ist beziehungsweise hergestellt wird. Somit ist die Vorrichtung 40 zum Durchführen des Verfahrens ausgebildet. Die Vorrichtung 40 umfasst ein Gehäuse 42, welches - wie besonders gut aus FIG 8 erkennbar ist - eine auch als Kammer bezeichnete Arbeitskammer 44 begrenzt. In der Arbeitskammer 44 wird das Bauelement 10, insbesondere unter einer Schutzgasatmosphäre, hergestellt. Hierzu sind Zuführelemente 46 vorgesehen, mittels welchen wenigstens ein Gas, aus welchem die Schutzgasatmosphäre in der Arbeitskammer 44 gebildet wird, in die Kammer 44 einleitbar ist beziehungsweise eingeleitet wird. Bei dem Gas handelt es sich vorzugsweise um Argon (Ar), sodass das Bauelement 10 in einer durch Argon gebildeten Schutzgasatmosphäre hergestellt wird.

Außerdem umfasst die Vorrichtung 40 eine vorliegend als Induktionsapparat oder Induktionsspule ausgebildete Heizeinrichtung 48, mittels welcher die Schicht 12 beziehungsweise das Substrat 14 vorzugsweise auf mehr als 500 Grad Celsius erwärmt wird, bevor und/oder während die Zwischenschicht 20 durch das generative Fertigungsverfahren, durch welches die Zwischenschicht 20 hergestellt wird, auf die Schicht 12 beziehungsweise das Substrat 14 aufgetragen beziehungsweise aufgebracht und insbesondere mit der Schicht 12 beziehungsweise mit dem Substrat 14 verbunden wird. Dabei ist aus FIG 8 die das Substrat 14 bildende Schicht 12 erkennbar, auf welcher beispielsweise zunächst die Zwischenschicht 20 und daraufhin die Schicht 16, insbesondere durch das jeweilige generative Fertigungsverfahren, hergestellt werden.

Die Vorrichtung 40 umfasst darüber hinaus einen auch als Pyrometer bezeichneten Temperatursensor 50, mittels welchem beispielsweise wenigstens eine in der Kammer 44 herrschende Temperatur, insbesondere der Schicht 12 beziehungsweise des Substrats 14, erfassbar ist beziehungsweise erfasst wird. Außerdem ist aus FIG 7 teilweise eine koaxiale Düse 52 erkennbar, mittels welcher beispielsweise ein Fluid, insbesondere ein Gas, in die Kammer 44 eingeleitet werden kann. Alternativ oder zusätzlich kann mittels der Düse 52 ein Fluid, insbesondere ein Gas, und/oder überschüssiges Pulver aus der Kammer 44 abgesaugt werden.

## Patentansprüche

1. Bauelement(10), welches aufweist:
- wenigstens eine erste Schicht (12), welche aus einer ersten Legierung gebildet ist;
- wenigstens eine zweite Schicht (16), welche aus einer von der ersten Legierung unterschiedlichen und Molybdän als ein Legierungselement aufweisenden zweiten Legierung gebildet ist; und
- eine zwischen der ersten Schicht (12) und der zweiten Schicht (16) angeordnete, auf zumindest eine der Schichten (12, 16) aufgebrachte und durch ein generatives Fertigungsverfahren hergestellte Zwischenschicht (20), unter deren Vermittlung die erste Schicht (12) mit der zweiten Schicht (16) verbunden ist, wobei die Zwischenschicht (20) aus einer von der ersten Legierung und der zweiten Legierung unterschiedlichen und Molybdän als ein Legierungselement aufweisenden dritten Legierung gebildet ist.

2. Bauelement (10) nach Anspruch 1,
wobei die erste Legierung eine Nickel-basierte Legierung ist.

3. Bauelement (10) nach Anspruch 1 oder 2,
wobei die erste Legierung frei von Molybdän ist.

4. Bauelement (10) nach einem der vorhergehenden Ansprüche, wobei die zweite Legierung Molybdän, Silizium, Rhenium und/oder Bor als Legierungselemente aufweist.

5. Bauelement (10) nach einem der vorhergehenden Ansprüche, wobei die dritte Legierung als Legierungselemente aufweist:
- Molybdän; und
- Lanthan und/oder Rhenium.

6. Bauelement (10) nach einem der Ansprüche 1 bis 4,
wobei die dritte Legierung als Legierungselemente aufweist:
- Molybdän; und
- Titan und/oder Rhenium und/oder Zirconium.

7. Bauelement (10) nach Anspruch 6,
wobei die dritte Legierung als eine TZM-Legierung ausgebildet ist.

8. Bauelement (10) nach einem der vorhergehenden Ansprüche, wobei die Zwischenschicht (20) durch Laserauftragsschweißen hergestellt ist.

9. Bauelement (10) nach einem der vorhergehenden Ansprüche, wobei die Zwischenschicht (20) mit wenigstens einer der Schichten (12, 16) verschweißt ist.

10. Verwendung eines Bauelements (10) nach einem der vorhergehenden Ansprüche, wobei das Bauelement (10) für eine Strömungsmaschine verwendet wird.

11. Verfahren zum Herstellen eines Bauelements (10), mit den Schritten:
- Bereitstellen wenigstens einer aus einer ersten Legierung gebildeten ersten Schicht (12);
- Bereitstellen wenigstens einer aus einer von der ersten Legierung unterschiedlichen und Molybdän als ein Legierungselement aufweisenden zweiten Legierung gebildeten zweiten Schicht (16);
- Herstellen einer Zwischenschicht (20), welche aus einer von der ersten Legierung und der zweiten Legierung unterschiedlichen und Molybdän als ein Legierungselement aufweisenden dritten Legierung mittels eines generativen Fertigungsverfahrens hergestellt wird;
- Anordnen der Zwischenschicht (20) zwischen der ersten Schicht (16) und der zweiten Schicht (20); und
- Verbinden der ersten Schicht (12) mit der zweiten Schicht (16) unter Vermittlung der Zwischenschicht (20).

12. Verfahren nach Anspruch 11,
wobei die Zwischenschicht (20) aus einem Pulver hergestellt wird.

13. Verfahren nach Anspruch 11 oder 12,
wobei die Zwischenschicht (20) mittels wenigstens eines Energiestrahls, insbesondere mittels wenigstens eines Laserstrahls, hergestellt wird.

14. Verfahren nach einem der Ansprüche 11 bis 13,
wobei als das generative Fertigungsverfahren Laserauftragsschweißen verwendet wird.

15. Verfahren nach einem der Ansprüche 11 bis 14,
wobei die Zwischenschicht (20) mittels des generativen Fertigungsverfahrens auf zumindest eine der Schichten (12, 16) aufgebracht wird, wobei die zumindest eine Schicht (12, 16) auf mindestens 500 Grad Celsius erwärmt wird, bevor und/oder während die Zwischenschicht (20) auf die zumindest eine Schicht (12, 16) aufgebracht wird.

## Geänderte Patentansprüche

### Geänderte Patentansprüche gemäss Regel 137(2) EPÜ.

**1.** Bauelement (10) für ein Laufrad einer Strömungsmaschine, wobei das Bauelement (10) aufweist:
- wenigstens eine erste Schicht (12), welche aus einer ersten Legierung gebildet ist;
- wenigstens eine zweite Schicht (16), welche aus einer von der ersten Legierung unterschiedlichen und Molybdän als ein Legierungselement aufweisenden zweiten Legierung gebildet ist; und
- eine zwischen der ersten Schicht (12) und der zweiten Schicht (16) angeordnete, auf zumindest eine der Schichten (12, 16) aufgebrachte und durch ein generatives Fertigungsverfahren hergestellte Zwischenschicht (20), unter deren Vermittlung die erste Schicht (12) mit der zweiten Schicht (16) verbunden ist, wobei die Zwischenschicht (20) aus einer von der ersten Legierung und der zweiten Legierung unterschiedlichen und Molybdän als ein Legierungselement aufweisenden dritten Legierung gebildet ist, wobei die dritte Legierung als Legierungselemente aufweist:
- Molybdän und Lanthan.

**2.** Bauelement (10) nach Anspruch 1,
wobei die erste Legierung eine Nickel-basierte Legierung ist.

**3.** Bauelement (10) nach Anspruch 1 oder 2,
wobei die erste Legierung frei von Molybdän ist.

**4.** Bauelement (10) nach einem der vorhergehenden Ansprüche,
wobei die zweite Legierung Molybdän und/oder Silizium und/oder Rhenium und/oder Bor als Legierungselemente aufweist.

**5.** Bauelement (10) nach einem der Ansprüche 1 bis 4,
wobei die dritte Legierung als Legierungselemente aufweist:
- Molybdän; und
- Titan und/oder Rhenium und/oder Zirconium.

**6.** Bauelement (10) nach Anspruch 5,
wobei die dritte Legierung als eine TZM-Legierung ausgebildet ist, wobei die TZM-Legierung Molybdän, 0,5 Gewichtsprozent Titan, 0,08 Gewichtsprozent Zirkonium als jeweilige Legierungselemente aufweist.

**7.** Bauelement (10) nach einem der vorhergehenden Ansprüche,
wobei die Zwischenschicht (20) durch Laserauftragsschweißen hergestellt ist.

**8.** Bauelement (10) nach einem der vorhergehenden Ansprüche,
wobei die Zwischenschicht (20) mit wenigstens einer der Schichten (12, 16) verschweißt ist.

**9.** Verwendung eines Bauelements (10) nach einem der vorhergehenden Ansprüche, wobei das Bauelement (10) für eine Strömungsmaschine verwendet wird.

**10.** Verfahren zum Herstellen eines Bauelements (10) für ein Laufrad einer Strömungsmaschine, mit den Schritten:
- Bereitstellen wenigstens einer aus einer ersten Legierung gebildeten ersten Schicht (12);
- Bereitstellen wenigstens einer aus einer von der ersten Legierung unterschiedlichen und Molybdän als ein Legierungselement aufweisenden zweiten Legierung gebildeten zweiten Schicht (16);
- Herstellen einer Zwischenschicht (20), welche aus einer von der ersten Legierung und der zweiten Legierung unterschiedlichen und Molybdän als ein Legierungselement aufweisenden dritten Legierung mittels eines generativen Fertigungsverfahrens hergestellt wird; wobei die dritte Legierung als Legierungselemente Molybdän und Lanthan aufweist,Anordnen der Zwischenschicht (20) zwischen der ersten Schicht (16) und der zweiten Schicht (20); und
- Verbinden der ersten Schicht (12) mit der zweiten Schicht (16) unter Vermittlung der Zwischenschicht (20).

**11.** Verfahren nach Anspruch 10,
wobei die Zwischenschicht (20) aus einem Pulver hergestellt wird.

**12.** Verfahren nach Anspruch 10 oder 11,
wobei die Zwischenschicht (20) mittels wenigstens eines Energiestrahls, insbesondere mittels wenigstens eines Laserstrahls, hergestellt wird.

**13.** Verfahren nach einem der Ansprüche 10 bis 12,
wobei als das generative Fertigungsverfahren Laserauftragsschweißen verwendet wird.

**14.** Verfahren nach einem der Ansprüche 10 bis 13,
wobei die Zwischenschicht (20) mittels des generativen Fertigungsverfahrens auf zumindest eine der Schichten (12, 16) aufgebracht wird, wobei die zumindest eine Schicht (12, 16) auf mindestens 500 Grad Celsius erwärmt wird, bevor und/oder während die Zwischenschicht (20) auf die zumindest eine Schicht (12, 16) aufgebracht wird.

**1.** Bauelement(10) für ein Laufrad einer Strömungsmaschine, wobei das Bauelement (10) aufweist:
- wenigstens eine erste Schicht (12), welche aus einer ersten Legierung gebildet ist;
- wenigstens eine zweite Schicht (16), welche aus einer von der ersten Legierung unterschiedlichen und Molybdän als ein Legierungselement aufweisenden zweiten Legierung gebildet ist; und
- eine zwischen der ersten Schicht (12) und der zweiten Schicht (16) angeordnete, auf zumindest eine der Schichten (12, 16) aufgebrachte und durch ein generatives Fertigungsverfahren hergestellte Zwischenschicht (20), unter deren Vermittlung die erste Schicht (12) mit der zweiten Schicht (16) verbunden ist, wobei die Zwischenschicht (20) aus einer von der ersten Legierung und der zweiten Legierung unterschiedlichen und Molybdän als ein Legierungselement aufweisenden dritten Legierung gebildet ist, wobei
- die erste Legierung eine Nickel-basierte Legierung ist,
die dritte Legierung als Legierungselemente aufweist:
- Molybdän; und Titan und/oder Rhenium und/oder Zirconium,
- die dritte Legierung als eine TZM-Legierung ausgebildet ist, wobei die TZM-Legierung Molybdän, 0,5 Gewichtsprozent Titan, 0,08 Gewichtsprozent Zirkonium als jeweilige Legierungselemente aufweist.

**2.** Bauelement (10) nach Anspruch 1,
wobei die erste Legierung frei von Molybdän ist.

**3.** Bauelement (10) nach einem der vorhergehenden Ansprüche,
wobei die zweite Legierung Molybdän und/oder Silizium und/oder Rhenium und/oder Bor als Legierungselemente aufweist.

**4.** Bauelement (10) nach einem der vorhergehenden Ansprüche,
wobei die dritte Legierung als Legierungselemente aufweist:
- Molybdän; und
- Lanthan und/oder Rhenium.

**5.** Bauelement (10) nach einem der vorhergehenden Ansprüche,
wobei die Zwischenschicht (20) durch Laserauftragsschweißen hergestellt ist.

**6.** Bauelement (10) nach einem der vorhergehenden Ansprüche,
wobei die Zwischenschicht (20) mit wenigstens einer der Schichten (12, 16) verschweißt ist.

**7.** Verwendung eines Bauelements (10) nach einem der vorhergehenden Ansprüche, wobei das Bauelement (10) für eine Strömungsmaschine verwendet wird.

**8.** Verfahren zum Herstellen eines Bauelements (10), mit den Schritten:
- Bereitstellen wenigstens einer aus einer ersten Legierung gebildeten ersten Schicht (12); wobei die erste Legierung eine Nickel-basierte Legierung ist,
- Bereitstellen wenigstens einer aus einer von der ersten Legierung unterschiedlichen und Molybdän als ein Legierungselement aufweisenden zweiten Legierung gebildeten zweiten Schicht (16);
- Herstellen einer Zwischenschicht (20), welche aus einer von der ersten Legierung und der zweiten Legierung unterschiedlichen und Molybdän als ein Legierungselement aufweisenden dritten Legierung mittels eines generativen Fertigungsverfahrens hergestellt wird; und die dritte Legierung als Legierungselemente Molybdän; und Titan und/oder Rhenium und/oder Zirconium aufweist und die dritte Legierung als eine TZM-Legierung ausgebildet ist, wobei die TZM-Legierung Molybdän, 0,5 Gewichtsprozent Titan, 0,08 Gewichtsprozent Zirkonium als jeweilige Legierungselemente aufweist,
- Anordnen der Zwischenschicht (20) zwischen der ersten Schicht (16) und der zweiten Schicht (20); und
- Verbinden der ersten Schicht (12) mit der zweiten Schicht (16) unter Vermittlung der Zwischenschicht (20).

**9.** Verfahren nach Anspruch 8,
wobei die Zwischenschicht (20) aus einem Pulver hergestellt wird.

**10.** Verfahren nach Anspruch 8 oder 9,
wobei die Zwischenschicht (20) mittels wenigstens eines Energiestrahls, insbesondere mittels wenigstens eines Laserstrahls, hergestellt wird.

**11.** Verfahren nach einem der Ansprüche 8 bis 10,
wobei als das generative Fertigungsverfahren Laserauftragsschweißen verwendet wird.

**12.** Verfahren nach einem der Ansprüche 8 bis 11,
wobei die Zwischenschicht (20) mittels des generativen Fertigungsverfahrens auf zumindest eine der Schichten (12, 16) aufgebracht wird, wobei die zumindest eine Schicht (12, 16) auf mindestens 500 Grad Celsius erwärmt wird, bevor und/oder während die Zwischenschicht (20) auf die zumindest eine Schicht (12, 16) aufgebracht wird.
